# EUROPÄISCHE PATENTSCHRIFT

(11) **EP 3 167 255 B1**
(45) Veröffentlichungstag und Bekanntmachung des Hinweises auf die Patenterteilung: **25.12.2019**
(21) Anmeldenummer: 15744117.1
(22) Anmeldetag: 29.06.2015
(51) Int. Cl.: G01F 1/66, G01F 15/14

(54) **ULTRASCHALLWANDLERANORDNUNG SOWIE ULTRASCHALLWASSERZÄHLER**
ULTRASONIC TRANSDUCER ARRANGEMENT AND ULTRASONIC WATER METER
AGENCEMENT DE TRANSDUCTEUR ULTRASONIQUE ET COMPTEUR D'EAU ULTRASONIQUE

(30) Priorität: 12.07.2014 DE 102014010375
(43) Veröffentlichungstag der Anmeldung: 17.05.2017
(73) Patentinhaber: Diehl Metering GmbH, 91522 Ansbach (DE)
(72) Erfinder: KROEMER, Harald, 91522 Ansbach (DE); ÖFELEIN, Wilhelm, 91522 Ansbach (DE); HÜNENBERGER, Patrick, 91522 Ansbach (DE)
(74) Vertreter: Diehl Patentabteilung
(86) Internationale Anmeldenummer: PCT/EP2015/001305
(87) Internationale Veröffentlichungsnummer: WO 2016/008566

(56) Entgegenhaltungen:
- EP-A1- 0 260 335
- DE-A1- 2 309 605
- DE-A1-102009 046 159
- GB-A- 2 429 061
- US-A- 2 931 223
- US-A1- 2010 313 676

## Beschreibung

Die vorliegende Erfindung betrifft eine Ultraschallwandleranordnung mit einem insbesondere taschenförmigen Gehäuse zur Montage der Ultraschallwandleranordnung in einem Durchgangsloch eines Gehäuses eines Ultraschallwasserzählers. Ferner betrifft die vorliegende Erfindung einen Ultraschallwasserzähler unter Verwendung einer entsprechenden Ultraschallwandleranordnung.

### Stand der Technik

Aus der DE OS 2 309 605 ist eine Ultraschallwandleranordnung gemäß dem Oberbegriff des Anspruchs 1 bekannt. Die Ultraschallwandleranordnung umfasst einen Wandlerträger mit einem in einem schrägen Winkel zur Montageebene orientierten akustischen Fenster, hinter dem sich ein von einer innerhalb des Wandlerträgers befindlichen Halteeinrichtung in Position gehaltener Ultraschallwandler befindet. Die Halteeinrichtung umfasst eine federvorgespannte Schubstange sowie eine Schulter, an der sich ein Ende der Feder abstützt, während das andere Ende der Feder sich gegen eine Justierschraube abstützt. Die Halteeinrichtung ist mittels eines Stöpsels sowie eines Splints innerhalb des Wandlerträgers fixiert und senkrecht zur Montageebene bzw. zum Messrohr orientiert. Zur Umlenkung der Haltekraft auf den schräg zur Montageebene positionierten Ultraschall-Wandlerkörper weist die Schubstange an ihrem Ende einen abgeschrägten Bereich auf.

Die aus der EP 0 260 335 A1 bekannte Ultraschallwandleranordnung besitzt ein taschenförmiges Gehäuse, in dem sich ein Wandlerkörper befindet, der mittels einer Spiralfeder gegen die Gehäusewand gedrückt wird, um das Auftreten temperaturspannungsbedingter Luftspalte zwischen Wandlerkörper und Gehäusewand zu vermeiden. Die Ultraschallwandleranordnung wird in Abschlussboxen verbaut, welche wiederum an Sockeln der Rohrleitung über Schrauben oder Flansche verbunden werden. Die Spiralfeder ist somit senkrecht zur Montageebene der Ultraschallwandleranordnung an der Rohrleitung orientiert.

Die GB 2 429 061 A zeigt einen Ultraschall-Durchflusszähler, bei dem Ultraschallzähler an keilförmigen Fortsätzen der Wandung des Ultraschallzählers befestigt werden.

Aus der US 2010/0313676 sowie der DE 10 2009 046 159 A1 sind jeweils Ultraschallwandleranordnungen bekannt, bei denen ein jeweils einen Wandlerkörper beherbergendes Gehäuse in eine schräg verlaufende Aufnahme des Messrohrs einsetzt wird.

Ultraschallwasserzähler, bei denen in einem eigenen Gehäuse untergebrachte Ultraschallwandleranordnungen im Bereich eines Durchgangslochs in einem Gehäuse eines Ultraschallwasserzählers untergebracht werden, sind hinreichend bekannt. Es handelt sich hierbei vorwiegend um sogenannte "Großwasserzähler" mit erhöhtem Nenndurchmesser.

Dementsprechend beschreibt z. B. die EP 2 333 495 A1 einen Ultraschallwasserzähler, bei dem je eine in einem eigenen Gehäuse untergebrachte Ultraschallwandleranordnung auf ein in das Gehäuse des Ultraschallwasserzählers eingeschnittenes, zugehöriges Durchgangsloch aufgesetzt und anschließend verschweißt wird. Zwei derartige Ultraschallwandleranordnungen sind so angeordnet, dass die daraus resultierende Messstrecke den Durchgangskanal des Ultraschallwasserzählers diagonal durchschallt. Das jeweilige Durchgangsloch wird entlang der gekrümmten Oberflächenkontur des Gehäuses des Ultraschallwasserzählers mittels eines Lasers eingebracht. Das Gehäuse der Ultraschallwandleranordnung ist zum Messkanal des Ultraschallwasserzählers hin offen, damit die Ultraschallwandler in direktem Kontakt mit Wasser durch den Wasserdruck in Position gehalten werden.

Aus der US 8,438,935 B2 sowie EP 2 386 835 A1 ist ein Ultraschall-Durchflussmesser bekannt, bei dem entlang des Gehäuseumfangs außerhalb des Gehäuses zwei Ultraschallwandlerkörper gegenüberliegend angeordnet sind, um einen Teilbereich des Strömungsquerschnitts zu durchschallen.

Aus der US 7,735,380 ist eine diagonale Anordnung von Ultraschallwandlerkörper im Außenbereich eines Ultraschallwasserzählers bekannt.

Diese aus der WO 2011/141 167 bekannte Ultraschallwandleranordnung umfasst einen becherförmigen durchschallbaren Gehäuseeinsatz, in dem ein Wandlerkörper untergebracht ist. Der becherförmige Gehäuseeinsatz taucht in ein Durchgangsloch im Gehäuse des Wasserzählers ein. Der Wandlerkörper ist hierbei parallel zur Montageebene des Gehäuseeinsatzes in Letzterem positioniert. Die Kontaktierung des Wandlerkörpers erfolgt über eine an den Wandlerkörper andrückende Feder. Zur Fixierung des Wandlerkörpers in dem Gehäuseeinsatz weist dieser ein deckelartiges Verschlussteil mit einer einseitig zugänglichen Innenkammer zur Aufnahme der Feder auf. Durch Montage des Deckels oder einer oberseitigen Platine erfolgt die Fixierung des Wandlerkörpers. Eine entsprechende Ultraschallwandleranordnung kann lediglich bei einem senkrecht zum Messkanal orientierten Wandlerkörper zum Einsatz kommen.

Schließlich ist aus der GB 2 101 318 A ein Ultraschalldurchflussmesser gemäß dem Oberbegriff des Anspruchs 1 bekannt. Der Wandlerkörper ist hierbei in einem schrägen Winkel zur Montageebene des Gehäuses an dem Gehäuse des Ultraschallzählers positioniert. Zur Fixierung des Wandlerkörpers an der zu durchschallenden Gehäusewand wird der Wandlerkörper mit Epoxidharz vergossen. Bedingt durch Druckschwankungen im Leitungsnetz sowie Temperaturschwankungen in der Umgebung besteht die Gefahr, dass sich der Wandlerkörper von der benachbarten Gehäusewand löst oder dass die Messung störende andersartige Einflüsse auftreten. Außerdem bedingt das Epoxidharz eine Schallabstrahlung nach hinten, was zu einem deutlichen Verlust an Wirkungsgrad führt.

### Aufgabe der vorliegenden Erfindung

Die Aufgabe der vorliegenden Erfindung besteht darin, einen alternativen Ultraschallwandleranordnung sowie einen entsprechenden Ultraschallwasserzähler zur Verfügung zu stellen.

### Lösung der Aufgabe

Die vorstehende Aufgabe wird bei der gattungsgemäßen Ultraschallwandleranordnung durch die Merkmale des kennzeichnenden Teils des Anspruchs 1 gelöst. Bei dem ebenfalls beanspruchten Ultraschallwasserzähler wird die Aufgabe durch die Merkmale des kennzeichnenden Teils des Anspruchs 18 gelöst. Zweckmäßige Ausgestaltungen der vorliegenden Erfindung werden in den abhängigen Ansprüchen beansprucht.

Die Halteeinrichtung umfasst ein elastisches Element sowie ein Formteil, welches das elastische Element unter Aufrechterhaltung eines Anpress- oder Haltedrucks an den Wandlerkörper andrückt, sodass dieser in seiner Position gesichert ist. Das elastische Element hat neben der Funktion, eine gewisse Anpresskraft zu erzeugen, auch die Funktion, aufgrund von sogenannten Druckschlägen im Wasserleitungsnetz bedingte reversible Durchbiegungen der Gehäusewand auszugleichen und hierdurch eine dauerhafte akustische Kontaktierung sicher zu stellen. Dadurch dass die Halteeinrichtung im montierten Zustand auf den Wandlerkörper eine zur Gehäusewand hin orientierte, gerichtete Haltekraft P ausübt, wird bei einem Auftreten von Druckschlägen im Wasserleitungsnetz bzw. bei starken Temperaturschwankungen und hierdurch bedingten Materialveränderungen dennoch eine gleichbleibend sichere Kontaktierung des Wandlerkörpers an der Gehäusewand erreicht. Gemäß der vorliegenden Erfindung ist es hierbei vorgesehen, dass das Formteil innerhalb des Gehäuses der Ultraschallwandleranordnung verrastbar untergebracht ist.

Die erfindungsgemäße Ultraschallwandleranordnung erlaubt es zudem, eine gut handhabbare Montageeinheit bestehend aus dem taschenförmigen Gehäuse des Wandlerkörpers sowie der Halteeinrichtung bei einem in dem Gehäuse im schrägen Winkel zur Montageebene positionierten Wandlerkörper zur Verfügung zu stellen.

Das Gehäuse der Ultraschallwandleranordnung besitzt einen Gehäusewandabschnitt, der etwa senkrecht zu der zu durchschallenden Gehäusewand verlaufend angeordnet ist. Die beiden Gehäusewände bilden eine Tasche, innerhalb der sich der Wandlerkörper und die Halteeinrichtung befinden.

An dem zur zu durchschallenden Gehäusewand senkrecht verlaufenden Gehäusewandabschnitt können erfindungsgemäß Ausformungen vorgesehen sein, um eine Verrastung und/oder Führung und/oder Verschwenkung des Formteils zum Gehäuse hin zu ermöglichen. Die entsprechenden Ausformungen können in einfacher Weise im Zuge des Spritzgussvorgangs eingeformt werden. Die Teileanzahl kann damit niedrig gehalten werden.

Zweckmäßigerweise kann aufgrund der Erfindung als elastisches Element eine Feder, vorzugsweise Spiralfeder eingesetzt werden. Über eine solche Feder kann zudem auch der Wandlerkörper an die Elektronik elektrisch kontaktiert werden. Außerdem hat die Feder den Vorteil, dass an der Rückseite des Wandlerkörpers sich Luft befindet, die einen Phasensprung bewirkt und damit eine Schallausbreitung nach hinten verhindert.

Eine zweckmäßige Ausgestaltung besteht darin, dass das Formteil in dem taschenförmigen Gehäuse um eine Achse drehbar ist und, vorzugsweise in einer bestimmten Drehstellung zum Gehäuse, mit Letzterem verrastbar ist. In dieser Stellung kann die Feder unter Aufbau einer Druckspannung auf den Wandlerkörper gehalten werden. Hierbei kann die Feder als loses Teil in das Formteil eingelegt werden und über das Formteil eine Arretierung herbeigeführt werden.

Alternativ kann das Formteil auch entlang einer Führung innerhalb des taschenförmigen Gehäuses, vorzugsweise linear; verschiebbar und in einer bestimmten Verschiebeposition mit dem Gehäuse verrastbar ausgebildet sein. In der Verrastungsposition wird das elastische Element ebenfalls unter einer gewissen Druckspannung fixiert.

Diese erfindungsgemäßen Maßnahmen ermöglichen eine Vorfixierung des schräg in dem taschenförmigen Gehäuse platzierten Wandlerkörpers bei beengten Platzverhältnissen, die durch eine insbesondere kreisrunde Form des Durchgangslochs vorgegeben sind. Eine Fixierung mittels eines Verschlussdeckels ist bei einer schrägen Anordnung des Wandlerkörpers nicht möglich. Nichtsdestotrotz ermöglicht die Erfindung eine wirksame Vorfixierung.

Die Montage wird auch dadurch vereinfacht, dass gemäß einer weiteren Ausführungsform im Gehäuse ein Anschlusskontakt für das freie Ende eines in das Gehäuse einlaufenden elektrischen Kabels vorgesehen ist. Dies ermöglicht eine besonders einfache Kontaktierung des Elektronikmoduls mit der Ultraschallwandleranordnung.

Zweckmäßigerweise kann als Anschlusskontakt das freie Ende der Feder, die den Wandlerkörper mit Anpressdruck beaufschlagt, verwendet werden. Hierbei kann beispielsweise eine zweite, zum Beispiel töpfchenförmige, Elektrode sich am Wandlerkörper befinden, deren Anschlussfahne beispielsweise durch eine Öffnung in der Halteeinrichtung hindurch nach oben geführt und mit einem Leiter des Kabels verbunden ist.

Alternativ kann auf dem Halteelement bzw. am Formteil auch mindestens ein Lötpad angeordnet sein, auf dem ein Leiter des elektrischen Kabels angelötet werden kann.

Zweckmäßigerweise ist hierfür das Formteil als sogenanntes MID (Molded Interconnect Device) ausgestaltet. Es handelt sich hierbei um räumlich spritzgegossene Schaltungsträger, also um Formteile mit integrierter Leiterbildstruktur. Diese können auf verschiedenartigste Weise hergestellt werden.

Erfindungsgemäß weist das Gehäuse einen ebenen Auflagebereich, vorzugsweise in Form einer Abstufung, auf, der im montierten Zustand dem äußeren Randbereich des Durchgangslochs gegenüberliegt. Daraus resultiert der Vorteil, dass das Durchgangsloch mit einem Fräswerkzeug in einfacher Weise erzeugt werden kann.

Zwischen dem Auflagebereich und dem äußeren Randbereich des Durchgangslochs am Gehäuse des Ultraschallwasserzählers ist zweckmäßigerweise ein Dichtung, beispielsweise ein O-Ring, vorgesehen.

Dadurch, dass das Gehäuse an dessen Oberseite einen umlaufenden emporragenden Steg aufweist, der beispielsweise von einer Durchtrittsöffnung durchsetzt sein kann, wird ein oberseitiger Raum geschaffen, wobei gleichzeitig das elektrisches Kabel in das Innere des Gehäuses der Ultraschallwandleranordnung seitwärts einlaufen kann.

Zweckmäßigerweise kann sich ein Deckel im oberen Bereich des Gehäuses befinden, vorzugsweise in einem gewissen Abstand zum oberseitigen Ende des emporragenden Stegs. Der Deckel hat den Vorteil, dass die Halteeinrichtung und deren elektrischer Anschlüsse in dem taschenförmigen Gehäuse abgedeckt sind, an der Oberseite aber durch den Steg bedingt ein Raum verbleibt. Dieser Raum ermöglicht es, den Wandler mit einer Kunststoffmasse wasserdicht zu vergießen.

Die vorliegende Erfindung betrifft des Weiteren, auch nebengeordnet beansprucht, eine Ultraschallwandleranordnung, bei der die Gehäusewand an der dem Ultraschallwasserzähler zugewandten Außenseite als Schalllinse ausgebildet ist, insbesondere indem sie eine sphärische oder parabolische Geometrie aufweist. Hierdurch werden störende Reflektionen in der an den Wandlerkörper angrenzenden Gehäusewand vermieden. Zusätzlich wird das Ultraschallsignal fokussiert. Diese Maßnahmen resultieren in einem verbesserten Wirkungsgrad des akustischen Systems. Die elektrische Empfangsspannung soll hierbei so groß sein, dass Unsicherheiten aufgrund elektronischer Rauschanteile an dem Gesamtmaß der Messunsicherheit keinen wesentlichen Anteil mehr beitragen.

Vorzugsweise kann die Gehäusewand an der dem Ultraschallwasserzähler zugewandten Außenseite mindestens eine Verstärkungsrippe aufweisen, beispielsweise in Form einer Verstärkungsrippe, die diametral durch die Gehäusewand hindurchläuft. Dies ermöglicht es einerseits, die Gehäusewand des Gehäuses der Ultraschallwandleranordnung, welche vorzugsweise durch durchschallbaren Kunststoff besteht, vergleichsweise dünnwandig auszugestalten. Hierdurch können Signalverluste reduziert und die Messgenauigkeit erhöht werden. Zudem wird bei erhöhten Drücken oder Drucksprüngen eine Durchbiegung der Gehäusewand vermieden oder eine solche zumindest verringert. Eine entsprechende Verstärkungsrippe ist zudem spritzgusstechnisch einfach zu realisieren.

Alternativ sind allerdings auch andere Strukturen zur Erhöhung der Festigkeit der Gehäusewand gegen Durchbiegung zweckmäßig, wie beispielsweise ringförmige Strukturen.

Die vorliegende Erfindung betrifft des Weiteren, ebenfalls nebengeordnet beansprucht, eine Ultraschallwandleranordnung, deren Gehäusewand an der dem Ultraschallwasserzähler zugewandten Außenseite eine Fresnel-Stufengeometrie aufweist. Hierbei handelt es sich um eine Aufteilung der Gehäusewand in mehrere ringförmige Bereiche, wobei sich in jedem dieser Bereiche die Dicke etwas verringert, sodass eine Reihe ringförmiger Stufen entsteht. Hierdurch kann die Schallabstrahlcharakteristik weiter optimiert werden.

Vorzugsweise weist die Gehäusewand im Falle des Vorhandenseins einer Fresnel-Stufengeometrie zumindest in dem Durchschallungsbereich eine weitgehend konstante Wandstärke auf. Die ringförmigen Strukturen der Fresnel-Stufengeometrie sind aus den Gleichungen zur Definition der aus der Optik bekannten Fresnel-Linsen abzuleiten. Hierbei sind die Strukturbreiten in erster Linie von der Wellenlänge des Schalls im Medium abhängig. Vorzugsweise hat jeder der Ringe eine gleiche Fläche.

Der Kugelradius der einzelnen Ringe definiert die Brennweite der akustischen Linse. Der Einsatz der Fresnel-Stufengeometrie bedingt somit eine akustische Linsenwirkung der Gehäusewand bei erhöhter Wandstärke und somit erhöhter mechanischer Wirksamkeit gegen Durchbiegung.

Die vorliegende Erfindung betrifft zudem einen Ultraschallwasserzähler gemäss dem Patentanspruch 18.

Dadurch, dass das Durchgangsloch in dem Gehäuse des Ultraschallwasserzählers einen ebenen Auflagebereich für das Gehäuse der Ultraschallwandleranordnung aufweist, wird es ermöglicht, zur Einbringung des Durchgangslochs herkömmliche Fräswerkzeuge einzusetzen. Dementsprechend kann bei der vorliegenden Erfindung das Durchgangsloch in der Gehäusewand des Ultraschallwasserzählers unter Einsatz eines Fräsers, vorzugsweise eines mehrstufigen Fräsers erfolgen, da die Ultraschallwandleranordnung in einer (ebenen) Montageebene A mit vorzugsweise ringförmiger Geometrie montiert werden kann. Es müssen keine aufwendigen, mit Laser geschnittenen Durchgangslöcher mit dreidimensionaler Kontur, die eine entsprechende Gegenkontur voraussetzen, hergestellt werden. Gleichwohl gewährleistet die erfindungsgemäße Konstruktion der Ultraschallwandleranordnung mit der schrägen Positionierung des Wandlerkörpers in dem Gehäuse sowie der Halteeinrichtung einen wirksamen Halt des Wandlerkörpers und damit eine erhöhte Betriebssicherheit.

Dadurch, dass das Durchgangsloch zweckmäßigerweise einen ringförmigen Kontaktbereich für das Gehäuse der Ultraschallwandleranordnung aufweist, wird es ermöglicht, Fräser mit einer Rotationsachse einzusetzen, die senkrecht zur Oberfläche des Gehäuses steht.

### Beschreibung der Erfindung anhand von Ausführungsbeispielen

Zweckmäßige Ausgestaltungen der Erfindung werden anhand von Ausführungsbeispielen näher erläutert. Es zeigen:
- Fig. 1: eine Schnittdarstellung durch einen Ultraschallwasserzähler mit einer Ultraschallwandleranordnung gemäß einem Beispiel der vorliegenden Erfindung;
- Fig. 2: eine Schnittdarstellung einer Ultraschallwandleranordnung gemäß einem ersten Ausführungsbeispiel der vorliegenden Erfindung;
- Fig. 3: eine Schnittdarstellung einer Ultraschallwandleranordnung gemäß einem zweiten Ausführungsbeispiel der vorliegenden Erfindung;
- Fig. 4: eine Draufsicht auf die Ultraschallwandleranordnung des zweiten Ausführungsbeispiels;
- Fig. 5: eine Schnittdarstellung einer Ultraschallwandleranordnung gemäß einem dritten Ausführungsbeispiel der vorliegenden Erfindung;
- Fig. 6: eine Schnittdarstellung einer Ultraschallwandleranordnung gemäß einem vierten Ausführungsbeispiel der vorliegenden Erfindung;
- Fig. 7: eine perspektivische Ansicht der erfindungsgemäßen Ultraschallwandleranordnung mit einer Verstärkungsrippe;
- Fig. 8: eine perspektivische Ansicht der erfindungsgemäßen Ultraschallwandleranordnung mit einer ringförmiger Struktur sowie
- Fig. 9: ein vergrößerte Detailausschnitt einer Gehäusewand mit einer Fresnel-Stufengeometrie.

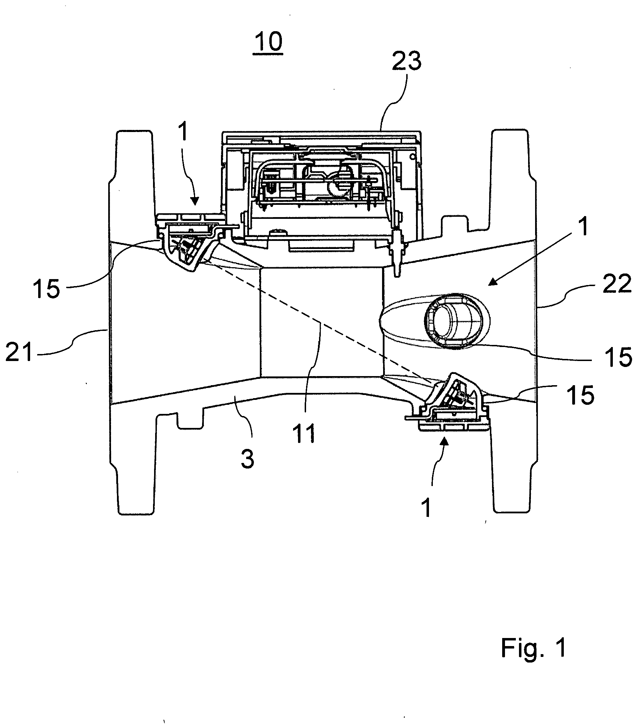

Die Bezugsziffer 10 in Fig. 1 bezeichnet einen Ultraschallwasserzähler in seiner Gesamtheit. In dem gezeigten Beispiel handelt es sich um einen sogenannten "Ultraschallgroßwasserzähler". Ultraschällgroßwasserzähler sind ausgelegt für Nenndurchflussmengen (Qn) von 15 m³/h bis 1500 m³/h. Typische Rohrdurchmesser von Ultraschallgroßwasserzählern liegen im Bereich von DN 50 bis DN 500. Der Ultraschallwasserzähler 10 verfügt über ein im Regelfall aus Metall bestehendes Gehäuse 3 mit einem Einlass 21 sowie einem gegenüberliegenden Auslass 22. Einlass 21 und Auslass 22 stehen mit einem (nicht dargestellten) Wasserleitungsnetz in Verbindung.

In das Gehäuse 3 sind mehrere Durchgangslöcher 15 eingefräst, um jeweils eine Ultraschallwandleranordnung 1 in das Gehäuse 3 an der betreffenden Stelle einsetzen zu können.

Zur Messung der Durchflussmenge an Wasser werden bei dem in Fig. 1 gezeigten Ultraschallwasserzähler mehrere diagonal verlaufende Ultraschallmessstrecken 11 (eine davon ist in Fig. 1 dargestellt) durch mehrere diagonal gegenüberliegend positionierte Ultraschallwandleranordnungen 1 festgelegt.

An der Oberseite des Ultraschallwasserzählers 10 befindet sich ein aufgesetztes, gekapseltes Elektronikmodul 23. Dieses beinhaltet üblicherweise eine Batterie als elektrische Energiequelle, einen Prozessor, eine Auswerteelektronik, einen Speicher sowie eine Datenausgabeeinrichtung. Letztere dient dazu, die Daten direkt oder per Fernablesung auszulesen.

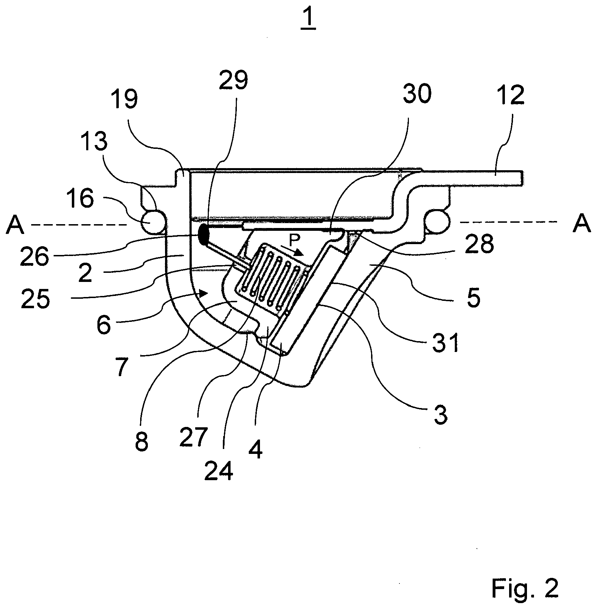

Fig. 2 zeigt eine erste Ausgestaltung einer erfindungsgemäßen Ultraschallwandleranordnung 1. Die Ultraschallwandleranordnung 1 umfasst ein taschenförmiges Gehäuse 2, welches vorzugsweise als Spritzgießteil konzipiert ist und aus einem durchschallbaren Material, vorzugsweise aus Kunststoff, besteht.

Das Gehäuse 2 besitzt einen ringartigen Auflagebereich 13, der im montierten Zustand dem äußeren Randbereich eines Durchgangslochs 15 eines Ultraschallwasserzähler, vgl. Fig. 1, gegenüberliegt und eine Montageebene A festlegt, die in dem in Fig. 1 gezeigten Beispiel eines Ultraschallwasserzählers parallel zur Durchflussrichtung verläuft.

Das Gehäuse 2 weist eine schräg zur Montageebene A verlaufende Gehäusewand 5 auf, an deren Innenseite ein Wandlerkörper 4 positioniert ist. Auf der der Gehäusewand 5 zugeordneten Hauptfläche des Wandlerkörpers 4 befindet sich eine Elektrode 3 mit einer seitlich überstehenden Elektrodenfahne für die Kontaktierung der Elektrode 3. Zwischen dem Wandlerkörper 4 und der Innenseite der Gehäusewand 5 kann zur Verbesserung der akustischen Ankopplung eine geeignete (in Fig. 2 nicht dargestellte) Schalleinkoppelungsmasse, zum Beispiel eine Paste, aufgetragen sein, um Hohlräume sowie Luftbläschen und damit eine negative Signalbeeinträchtigung zu vermeiden.

Erfindungsgemäß umfasst die Ultraschallwandleranordnung 1 eine Halteeinrichtung 6 für den Wandlerkörper 4, welche einerseits ein elastisches Element, zum Beispiel eine Feder 8, vorzugsweise eine Spiralfeder, sowie ein das elastische Element umgebendes Formteil 7 aufweist. Das Formteil 7, welches vorzugsweise ebenfalls aus Kunststoff besteht und als Spritzgießteil konzipiert ist, besitzt eine einseitig offene Kammer, in die die Feder 8 eingesetzt werden kann. Zudem kann das Formteil 7 ein stirnseitiges Durchgangsloch 25 aufweisen, welches zur Durchführung des freien Endes der Feder 8 dient. Das Formteil 7 ist um eine Drehachse 30 drehbar oder verschwenkbar und in einer bestimmten Drehstellung sowie Position zum Wandlerkörper 4 arretierbar.

Diese Arretierung kann beispielsweise durch mindestens eine an dem Formteil angeformte Nase 24, die an einer gehäuseseitigen Ausbauchung 27 angreift, realisiert sein. Zur Montage ist es hierbei lediglich notwendig, die Feder 8 in das Formteil 7 einzulegen, das Formteil 7 zusammen mit der Feder 8 auf den Wandlerkörper 4 zu drücken und gleichzeitig um die Drehachse 30 einzuschwenken, bis die Nase 24 an der Ausbuchtung 27 des Gehäuses 2 einrastet. Das Halteteil 6 hält in diesem Fall den Wandlerkörper 4 mit einer definierten, Wandlerkörper hin gerichteten Haltekraft P.

Die Kontaktierung erfolgt über ein elektrisches Kabel 12, zum Beispiel ein Koaxialkabel, welches waagerecht zugeführt wird und dessen Endbereich sich ebenfalls waagerecht verlaufend innerhalb des Gehäuses 2 der Wandleranordnung 1 befindet. Zur Kontaktierung kann z. B. die Abschirmung 28 des Kabels 12 in einfacher Weise mit der Anschlussfahne der Elektrode 3 verlötet werden. Des Weiteren kann zwischen der Seele 29 des Kabels 12 und dem freien Ende der Feder 8 eine Lötverbindung 26 hergestellt werden. Die Feder 8 dient zur elektrischen Kontaktierung des Wandlerkörpers 4 auf der der Elektrode 31 gegenüber liegenden Seite.

Erfindungsgemäß kann die Gehäusewand 5 auch als Schalllinse ausgebildet sein. Zur Vermeidung störender Reflektionen an der an den Wandlerkörper 4 angrenzenden Gehäusewand 5 und zur Fokussierung der Ultraschallsignale besitzt die Außenwand der Gehäusewand 5 vorzugsweise eine sphärische oder parabolische Geometrie. Hierdurch wird gewährleistet, dass die elektrische Empfangsspannung groß bleibt, sodass Unsicherheiten durch elektronische Rauschanteile zu keinem wesentlichen Anteil am Messunsicherheitsvolumen beitragen. Zusätzlich sorgt die variierende Wanddicke für eine maximale Druckstabilität des Bauteils.

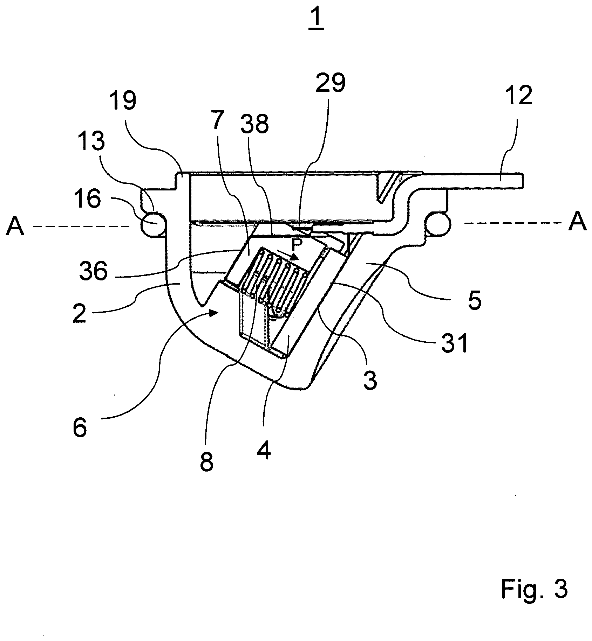

Die Fig. 3 zeigt eine alternative Ausgestaltung der erfindungsgemäßen Ultraschallwandleranordnung 1. Diese Anordnung unterscheidet sich von der in Fig. 2 dargestellten Anordnung durch die Ausgestaltung der Halteeinrichtung 6 und die Kontaktierung. Das Formteil 7 ist hierbei nicht drehbar gelagert, sondern in einer zum Wandlerkörper 4 hinführenden Richtung verschiebbar ausgeführt. Die Verrastung des Formkörpers 7 erfolgt bei einer, vorzugsweise festgelegten, Verschiebeposition des Formkörpers 7 hin zum Wandlerkörper 4. Bei der Verschiebung wird gleichzeitig die Feder 8 gespannt, sodass eine elektrische Kontaktierung sichergestellt ist. Auch hier hält die Halteeinrichtung 6 den Wandlerkörper 4 mit einer gerichteten Haltekraft P in Position.
Die Kontaktierung der Seele 29 des Kabels 12 erfolgt hierbei über ein Lötpad 38, welches auf der Oberseite des Formteils 7 vorgesehen ist. Hierzu muss eine Leiterbahn 36 von der ringförmigen Auflagefläche der Feder 8 an dem Wandlerkörper 4 um das Formteil 7 herum bis zu dem Lötpad 38 geführt werden. Auch hier hält die Halteeinrichtung 6 den Wandlerkörper 4 mit einer gerichteten Haltekraft P in Position.

Zum Einsatz kommen kann hierbei ein Formteil 7 mit eingegossenen Schaltungsträgern bzw. einem sogenannten MID (Molded Interconnect Devices)-Formteil. Hierbei handelt es sich um Formteile mit in das Formteil integrierter Leiterbildstruktur.

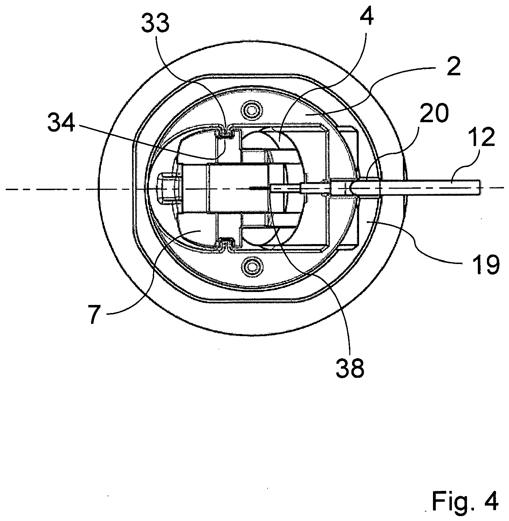

Die Darstellung gemäß Fig. 4 zeigt eine Draufsicht auf die Ausgestaltung der Ultraschallwandleranordnung gemäß Fig. 3 mit abgenommenem Deckel. Aus der Darstellung ist zu ersehen, dass das Formteil 7 beidseitig eine Nut 34 aufweist, in die ein Steg 33, der vorzugsweise am Gehäuses 2 vorgesehen oder in dieses eingeformt ist, eingreift, sodass das Formteil 7 zusammen mit der in Fig. 4 nicht dargestellten Feder 8 auf den Wandlerkörper 4 hin verschoben und die Feder 8 und damit der Wandlerkörper 4 unter Spannung gesetzt werden kann und damit eine Haltekraft P ausübt. Zusätzlich ist ein (nicht dargestellter) Rastmechanismus vorgesehen, der in der Lage ist, die auftretende Federkraft aufzunehmen.

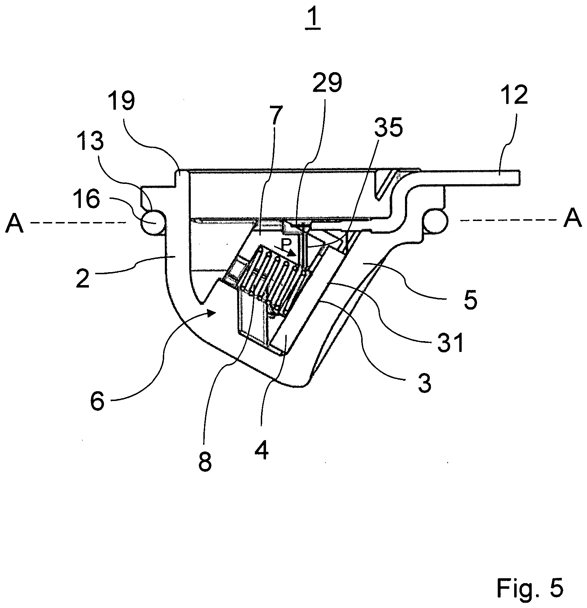

Aus der Darstellung der Fig. 5 ist eine Ultraschallwandleranordnung 1 ersichtlich, die im Wesentlichen der Ausgestaltung nach Fig. 3 und 4 entspricht. Anstelle einer Kontaktierung eines Lötpads ist eine zweite Elektrode 35 vorgesehen, die mit der Seele 29 des Kabels 12 verlötet ist und sich auf der der ersten Elektrode 31 gegenüberliegenden Seite des Wandlerkörpers 4 befindet. Diese zweite Elektrode 35 kann eine Töpfchenform besitzen. Diese ermöglicht es, die zweite Elektrode vor der Montage auf die ersten Federwindungen der Feder 8 aufzustecken und anschließend die Feder 8 zusammen mit der zweiten Elektrode 35 in das Formteil 7 einzulegen und zu montieren. Auch hier hält die Halteeinrichtung 6 den Wandlerkörper 4 mit einer gerichteten Haltekraft P in Position.

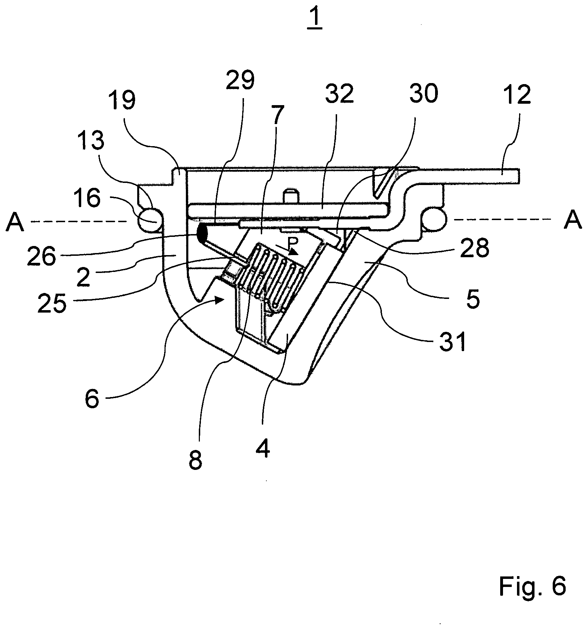

Die Ausgestaltung nach Fig. 6 zeigt eine zu den Ausgestaltungen der Fig. 4 und 5 leicht abgewandelte Ausgestaltung, An der Oberseite der Ultraschallwandleranordnung kann in einem bestimmten Abstand zum oberseitigen Ende des Stegs 19 ein Deckel 32 vorgesehen sein, der den Anschlussbereich des elektrischen Kabels 12 abdeckt. Zugleich wird hierdurch die Möglichkeit geschaffen, den durch den Steg 19 verbleibenden oberhalb des Deckels 32 befindlichen Raum mit einer (nicht dargestellten) Kunststoffmasse wasserdicht zu vergießen. Des Weiteren ist zwischen der Seele 29 des Kabels 12 und dem freien Ende der Feder 8 eine Lötverbindung 26 vorgesehen.

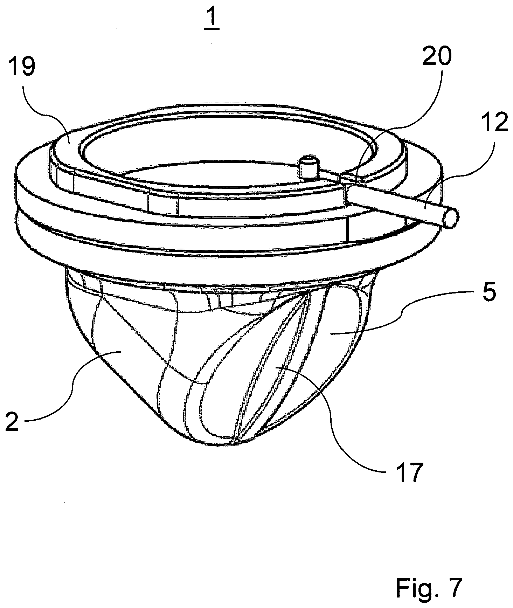

Aus der Fig. 7 ist eine weitere Ausgestaltung der erfindungsgemäßen Ultraschallwandleranordnung 1 gemäß einer der vorgenannten Konstruktionen ersichtlich, bei der zusätzlich an der Außenseite der Gehäusewand 5, die eine sphärische oder parabolische Geometrie aufweist, eine vorzugsweise diametral sich erstreckende Verstärkungsrippe 17 eingeformt ist. Hierdurch wird eine Verringerung der Durchbiegung der Gehäusewand 5 bei sehr hohen Drücken erreicht. Vorzugsweise sind die Dimensionen der Verstärkungsrippe 17 kleiner als die Wellenlänge der Anregungsfrequenz des Wandlerkörpers 4, sodass sich die Verstärkungsrippe 17 nicht negativ auf die Schallabstrahlung und/oder auf den Schalleintritt auswirkt. Eine entsprechende Verstärkungsrippe 17 kann spritzgusstechnisch einfach realisiert werden.

Aus der Darstellung gemäß Fig. 7 wird deutlich, wie das horizontal einlaufende Kabel 12 sich durch die Durchtrittsöffnung 20 im Steg 19 hindurch erstreckt.

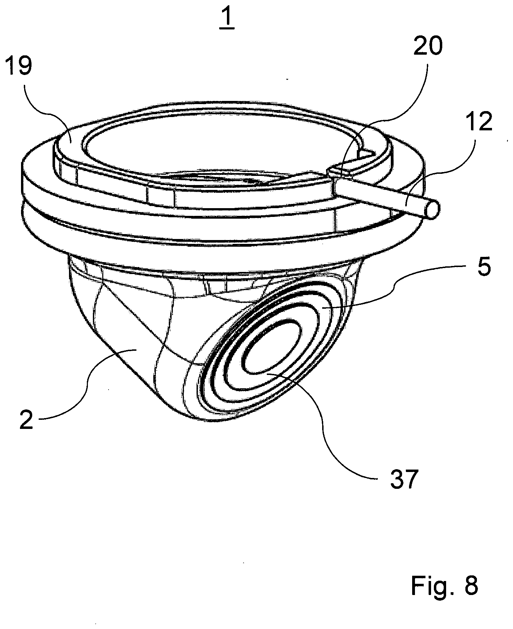

Alternativ zu dem in Fig. 7 gezeigten Ausführungsbeispiel können im Bereich der Gehäusewand 5 auch ringförmige Strukturen 37 zur Gewährleistung einer erhöhten Stabilität gegen Durchbiegung, wie in Fig. 8 gezeigt, vorgesehen sein.

Diese ringförmigen Strukturen können gemäß einem weiteren Ausführungsbeispiel nicht nur der Versteifung der Gehäusewand 5 dienen sondern auch dazu vorgesehen sein, eine Schalllinse mit einer Charakteristik nach Art einer Fresnel-Linse zu gewährleisten. Hierdurch kann die Schallabstrahlcharakteristik weiter optimiert werden.

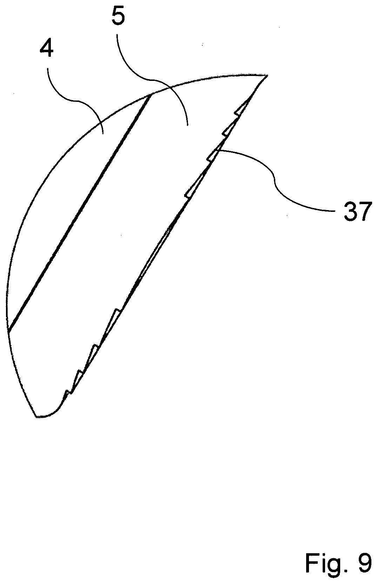

Fig. 9 zeigt in einem vergrößerten Teilschnittbild die Möglichkeit der Ausbildung der Gehäusewand 5 nach dem vorher genannten Fresnel-Prinzip. Die Wandstärke der Gehäusewand 5 kann hierbei im Wesentlichen konstant ausgebildet sein. An der Außenseite der Gehäusewand 5 befinden sich mehrere ringförmige Strukturen 37, die aus den Gleichungen zur Definition der aus der Optik bekannten Fresnel-Linsen abgeleitet sind. Dementsprechend sind die Breiten der Struktur in erster Linie von der Wellenlänge des Schalls im Medium (z. B. Wasser) abhängig. Vorzugsweise hat jeder Ring die gleiche Fläche. Der Kugelradius der Ringe definiert die Brennweite der gebildeten akustischen Linse und entspricht im vorliegenden Fall dem Kugelradius der sphärischen bzw. parabolischen Oberfläche der Außenseite der Gehäusewand 5 in Fig. 1. Im Mittelbereich des Durchschallungsbereichs der Gehäusewand 5 ist eine leichte parabolische bzw. sphärische Krümmung vorgesehen. Diese Ausgestaltung der Gehäusewand 5 hat den Vorteil einer akustischen Linse mit einer gleichbleibenden Wandstärke.

### BEZUGSZEICHENLISTE

- 1: Ultraschallwandleranordnung
- 2: Gehäuse
- 3: Gehäuse (Ultraschallwasserzähler)
- 4: Wandlerkörper
- 5: Gehäusewand
- 6: Halteeinrichtung
- 7: Formteil
- 8: Feder
- 9: Führung
- 10: Ultraschallwasserzähler
- 11: Ultraschallmessstrecke
- 12: Elektrisches Kabel
- 13: ebener Auflagebereich
- 14: Auflagebereich
- 15: Durchgangsloch
- 16: Dichtung
- 17: Verstärkungsrippe
- 18: Fresnel-Stufengeometrie
- 19: Steg
- 20: Durchtrittsöffnung
- 21: Einlass
- 22: Auslass
- 23: Elektronikmodul
- 24: Nase
- 25: Durchgangsloch
- 26: Lötverbindung
- 27: Gehäuseseitige Ausbauchung
- 28: Abschirmung
- 29: Seele
- 30: Drehachse
- 31: erste Elektrode
- 32: Deckel
- 33: Steg
- 34: Nut
- 35: zweite Elektrode
- 36: Leiterbahn
- 37: ringförmige Struktur
- 38: Lötpad

- A: Montagebene
- P: Haltekraft

## Patentansprüche

1. Ultraschallwandleranordnung (1) mit
einem Gehäuse (2) ausgeführt zur Montage der Ultraschallwandleranordnung in einem Durchgangsloch (15) in einem Gehäuse (3) eines Ultraschallwasserzählers (10) in einer Montageebene A,
einem im Gehäuse (2) der Ultraschallwandleranordnung (1) befindlichen Wandlerkörper (4) zur Erzeugung und/oder zum Empfang eines akustischen Signals,
einer dem Wandlerkörper (4) zugeordneten Gehäusewand (5), durch die hindurch das akustische Signal verläuft, elektrischen Kontaktmitteln zum Anschluss des Wandlerkörpers (4) an eine Spannungs- oder Stromquelle, wobei
die dem Wandlerkörper (4) zugeordnete Gehäusewand (5), durch die hindurch das akustische Signal verläuft, in einem schrägen Winkel zur Montageebene A der Ultraschallwandleranordnung an dem Gehäuse (3) des Ultraschallwasserzählers verläuft,
der Wandlerkörper (4) in dem Gehäuse (2) der Ultraschallwandleranordnung (1) in dem schrägen Winkel zur Montageebene A der Ultraschallwandleranordnung an dem Gehäuse (3) des Ultraschallwasserzählers positioniert ist und innerhalb des Gehäuses (2) der Ultraschallwandleranordnung (1) eine Halteeinrichtung (6) vorgesehen ist, die ein auf den Wandlerkörper (4) wirkendes elastisches Element sowie ein Formteil (7) aufweist,
**dadurch gekennzeichnet, dass** das Formteil (7) das elastische Element unter Anpressdruck am Wandlerkörper (4) hält und auf den Wandlerkörper (4) eine zur Gehäusewand (5) hin orientierte Haltekraft P ausübt,
wobei die Halteeinrichtung (6) in dem schrägen Winkel zur Montageebene A der Ultraschallwandleranordnung (1) orientiert ist und
das Formteil (7) innerhalb des Gehäuses (2) der Ultraschallwandleranordnung (1) verrastbar ist.

2. Ultraschallwandleranordnung nach Anspruch 1, **dadurch gekennzeichnet, dass** als elastisches Element eine Feder (8) vorgesehen ist.

3. Ultraschallwandleranordnung nach Anspruch 1 oder 2, **dadurch gekennzeichnet, dass** das Formteil (7) um eine Achse (8) drehbar und in einer Drehstellung mit dem Gehäuse (2) der Ultraschallwandleranordnung (1) verrastbar ist.

4. Ultraschallwandleranordnung nach Anspruch 1 oder 2, **dadurch gekennzeichnet, dass** das Formteil (7) entlang einer Führung (9) verschiebbar und in einer Verschiebestellung mit dem Gehäuse (2) der Ultraschallwandleranordnung (1) verrastbar ist.

5. Ultraschallwandleranordnung nach mindestens einem der vorhergehenden Ansprüche, **dadurch gekennzeichnet, dass** das Gehäuse (2) der Ultraschallwandleranordnung (1) Ausformungen (27, 33) umfasst, die zur Verrastung und/oder Führung und/oder Verschwenkung des Formteils (7) mit Letzterem zusammenwirken.

6. Ultraschallwandleranordnung nach mindestens einem der vorhergehenden Ansprüche, **dadurch gekennzeichnet, dass** im Gehäuse (2) der Ultraschallwandleranordnung (1) ein Anschlusskontakt für das freie Ende eines in das Gehäuse (2) der Ultraschallwandleranordnung (1) einlaufendes elektrisches Kabel (12) vorgesehen ist.

7. Ultraschallwandleranordnung nach Anspruch 6, **dadurch gekennzeichnet, dass** als Anschlusskontakt das freie Ende der Feder (8) vorgesehen ist.

8. Ultraschallwandleranordnung nach Anspruch 6, **dadurch gekennzeichnet, dass** als Anschlusskontakt ein am Formteil (7) angeordneter Lötpad (38) vorgesehen ist.

9. Ultraschallwandleranordnung nach Anspruch 6, **dadurch gekennzeichnet, dass** das Formteil (7) als MID-Bauteil ausgebildet ist.

10. Ultraschallwandleranordnung nach mindestens einem der vorhergehenden Ansprüche, **dadurch gekennzeichnet, dass** das Gehäuse (2) der Ultraschallwandleranordnung (1), der Wandlerkörper (4) sowie die Halteeinrichtung (6) eine Montageeinheit bilden.

11. Ultraschallwandleranordnung nach mindestens einem der vorhergehenden Ansprüche, **dadurch gekennzeichnet, dass** das Gehäuse (2) der Ultraschallwandleranordnung (1) einen ebenen Auflagebereich (13) aufweist, der im montierten Zustand dem äußeren Randbereich des Durchgangslochs (15) gegenüberliegt.

12. Ultraschallwandleranordnung nach Anspruch 11, **dadurch gekennzeichnet, dass** sich zwischen Auflagebereich (13) und dem äußeren Randbereich des Durchgangslochs (15) eine Dichtung (16) befindet.

13. Ultraschallwandleranordnung nach mindestens einem der vorhergehenden Ansprüche, **dadurch gekennzeichnet, dass** das Gehäuse (2) der Ultraschallwandleranordnung (1) an dessen Oberseite einen umlaufenden emporragenden Steg (19) aufweist, der von einer Durchtrittsöffung (20) durchsetzt ist.

14. Ultraschallwandleranordnung nach mindestens einem der vorhergehenden Ansprüche, **dadurch gekennzeichnet, dass** die Gehäusewand (5) an der dem Ultraschallwasserzähler (10) zugewandten Außenseite eine sphärische oder parabolische Geometrie aufweist.

15. Ultraschallwandleranordnung nach Anspruch 14, **dadurch gekennzeichnet, dass** die Gehäusewand (5) an der dem Ultraschallwasserzähler (10) zugewandten Außenseite mindestens eine Verstärkungsrippe (17) aufweist.

16. Ultraschallwandleranordnung nach mindestens einem der vorhergehenden Ansprüche, **dadurch gekennzeichnet, dass** die Gehäusewand (5) an der dem Ultraschallwasserzähler (10) zugewandten Außenseite eine Fresnel-Stufengeometrie (18) aufweist.

17. Ultraschallwandleranordnung nach Anspruch 16, **dadurch gekennzeichnet, dass** die Gehäusewand (5) zumindest in dem Durchschallungsbereich eine weitgehend konstante Wandstärke aufweist.

18. Ultraschallwasserzähler (10) mit
einem Einlass (21),
einem Auslass (22),
einem Gehäuse (3) zum Einbau des Ultraschallwasserzählers (10) in ein Wasserleitungsnetz,
einem Elektronikmodul (23), welches an der Außenseite des Gehäuses (3) angeordnet ist, sowie
mindestens einem Durchgangsloch (15) zur Montage einer Ultraschallwandleranordnung (1), **gekennzeichnet durch**
eine Ultraschallwandleranordnung (1) nach mindestens einem der vorhergehenden Ansprüche.

19. Ultraschallwasserzähler nach Anspruch 18, **dadurch gekennzeichnet, dass** das Durchgangsloch (15) einen ebenen Kontaktbereich für das Gehäuse (2) der Ultraschallwandleranordnung (1) aufweist.

20. Ultraschallwasserzähler nach Anspruch 18 oder 19, **dadurch gekennzeichnet, dass** das Durchgangsloch (15) einen ringförmigen Kontaktbereich für das Gehäuse (2) der Ultraschallwandleranordnung (1) aufweist.

## Claims

1. Ultrasonic transducer arrangement (1) having
a housing (2), which is designed for mounting the ultrasonic transducer arrangement in a through-hole (15) in a housing (3) of an ultrasonic water meter (10) on a mounting plane A,
a transducer body (4), which is situated in the housing (2) of the ultrasonic transducer arrangement (1) and serves for generating and/or receiving an acoustic signal,
a housing wall (5), which is assigned to the transducer body (4) and through which the acoustic signal passes,
electrical contact means for connecting the transducer body (4) to a voltage or current source, wherein
the housing wall (5) which is assigned to the transducer body (4) and through which the acoustic signal passes extends on the housing (3) of the ultrasonic water meter at an oblique angle to the mounting plane A of the ultrasonic transducer arrangement,
the transducer body (4) in the housing (2) of the ultrasonic transducer arrangement (1) is positioned on the housing (3) of the ultrasonic water meter at the oblique angle to the mounting plane A of the ultrasonic transducer arrangement, and
a holding device (6) is provided within the housing (2) of the ultrasonic transducer arrangement (1) and has an elastic element, which acts on the transducer body (4), and a moulded part (7),
**characterized in that** the moulded part (7) holds the elastic element against the transducer body (4) under contact pressure and exerts on the transducer body (4) a holding force P which is oriented towards the housing wall (5),
wherein
the holding device (6) is oriented at the oblique angle to the mounting plane A of the ultrasonic transducer arrangement (1), and
the moulded part (7) is able to be latched within the housing (2) of the ultrasonic transducer arrangement (1).

2. Ultrasonic transducer arrangement according to Claim 1, **characterized in that** a spring (8) is provided as an elastic element.

3. Ultrasonic transducer arrangement according to Claim 1 or 2, **characterized in that** the moulded part (7) is able to be rotated about an axis (8) and, in one rotational position, is able to be latched to the housing (2) of the ultrasonic transducer arrangement (1).

4. Ultrasonic transducer arrangement according to Claim 1 or 2, **characterized in that** the moulded part (7) is able to be displaced along a guide (9) and, in one displacement position, is able to be latched to the housing (2) of the ultrasonic transducer arrangement (1).

5. Ultrasonic transducer arrangement according to at least one of the preceding claims, **characterized in that** the housing (2) of the ultrasonic transducer arrangement (1) comprises formations (27, 33) which, for the purpose of latching and/or guiding and/or pivoting the moulded part (7), interact with the latter.

6. Ultrasonic transducer arrangement according to at least one of the preceding claims, **characterized in that** provided in the housing (2) of the ultrasonic transducer arrangement (1) is a connection contact for the free end of an electrical cable (12) which runs into the housing (2) of the ultrasonic transducer arrangement (1).

7. Ultrasonic transducer arrangement according to Claim 6, **characterized in that** the free end of the spring (8) is provided as a connection contact.

8. Ultrasonic transducer arrangement according to Claim 6, **characterized in that** a solder pad (38) which is arranged on the moulded part (7) is provided as a connection contact.

9. Ultrasonic transducer arrangement according to Claim 6, **characterized in that** the moulded part (7) is designed as an MID component.

10. Ultrasonic transducer arrangement according to at least one of the preceding claims, **characterized in that** the housing (2) of the ultrasonic transducer arrangement (1), the transducer body (4) and the holding device (6) form a mounting unit.

11. Ultrasonic transducer arrangement according to at least one of the preceding claims, **characterized in that** the housing (2) of the ultrasonic transducer arrangement (1) has a flat bearing region (13) which, in the mounted state, is situated opposite the outer edge region of the through-hole (15).

12. Ultrasonic transducer arrangement according to Claim 11, **characterized in that** a seal (16) is situated between the bearing region (13) and the outer edge region of the through-hole (15).

13. Ultrasonic transducer arrangement according to at least one of the preceding claims, **characterized in that** the housing (2) of the ultrasonic transducer arrangement (1) has, on its upper side, a peripheral upwardly projecting web (19) through which a through-opening (20) extends.

14. Ultrasonic transducer arrangement according to at least one of the preceding claims, **characterized in that** the housing wall (5) has, on the outer side facing the ultrasonic water meter (10), a spherical or parabolic geometry.

15. Ultrasonic transducer arrangement according to Claim 14, **characterized in that** the housing wall (5) has, on the outer side facing the ultrasonic water meter (10), at least one reinforcement rib (17).

16. Ultrasonic transducer arrangement according to at least one of the preceding claims, **characterized in that** the housing wall (5) has, on the outer side facing the ultrasonic water meter (10), a Fresnel stepped geometry (18) .

17. Ultrasonic transducer arrangement according to Claim 16, **characterized in that** the housing wall (5) has a largely constant wall thickness at least in the sound transmission region.

18. Ultrasonic water meter (10) having
an inlet (21),
an outlet (22),
a housing (3) for installing the ultrasonic water meter (10) into a water supply network,
an electronic module (23), which is arranged on the outer side of the housing (3), and
at least one through-hole (15) for mounting an ultrasonic transducer arrangement (1), **characterized by**
an ultrasonic transducer arrangement (1) according to at least one of the preceding claims.

19. Ultrasonic water meter according to Claim 18, **characterized in that** the through-hole (15) has a flat contact region for the housing (2) of the ultrasonic transducer arrangement (1).

20. Ultrasonic water meter according to Claim 18 or 19, **characterized in that** the through-hole (15) has a ringshaped contact region for the housing (2) of the ultrasonic transducer arrangement (1).

## Revendications

1. Système de transducteur ultrasonore (1) doté
d'un boîtier (2) réalisé pour le montage du système de transducteur ultrasonore dans un trou de passage (15) dans un boîtier (3) d'un compteur d'eau à ultrasons (10) dans un plan de montage A,
d'un corps de transducteur (4) se trouvant dans le boîtier (2) du système de transducteur ultrasonore (1) pour produire et/ou recevoir un signal acoustique,
d'une paroi de boîtier (5) ordonnée au corps de transducteur (4), à travers laquelle le signal acoustique passe,
de moyens de contact électrique pour le raccordement du corps de transducteur (4) à une source de tension ou de courant, dans lequel
la paroi de boîtier (5) ordonnée au corps de transducteur (4), à travers laquelle le signal acoustique passe, s'étend sur le boîtier (3) du compteur d'eau à ultrasons à un angle incliné par rapport au plan de montage A du système de transducteur ultrasonore,
le corps de transducteur (4) dans le boîtier (2) du système de transducteur ultrasonore (1) est positionné sur le boîtier (3) du compteur d'eau à ultrasons à l'angle incliné par rapport au plan de montage A du système de transducteur ultrasonore,
un dispositif de maintien (6) est prévu à l'intérieur du boîtier (2) du système de transducteur ultrasonore (1), comportant un élément élastique opérant sur le corps de transducteur (4) ainsi qu'une pièce moulée (7),
**caractérisé en ce que** la pièce moulée (7) maintient l'élément élastique sous pression de contact sur le corps de transducteur (4) et exerce sur le corps de transducteur (4) une force de maintien P orientée vers la paroi de boîtier (5),
dans lequel le dispositif de maintien (6) est orienté à l'angle incliné par rapport au plan de montage A du système de transducteur ultrasonore (1) et
la pièce moulée (7) est enclenchable à l'intérieur du boîtier (2) du système de transducteur ultrasonore (1).

2. Système de transducteur ultrasonore selon la revendication 1, **caractérisé en ce qu'**un ressort (8) est prévu comme élément élastique.

3. Système de transducteur ultrasonore selon la revendication 1 ou 2, **caractérisé en ce que** la pièce moulée (7) peut tourner autour d'un axe (8) et est enclenchable avec le boîtier (2) du système de transducteur ultrasonore (1) dans une position de rotation.

4. Système de transducteur ultrasonore selon la revendication 1 ou 2, **caractérisé en ce que** la pièce moulée (7) peut coulisser le long d'un guidage (9) et est enclenchable avec le boîtier (2) du système de transducteur ultrasonore (1) dans une position de coulissement.

5. Système de transducteur ultrasonore selon au moins une des revendications précédentes, **caractérisé en ce que** le boîtier (2) du système de transducteur ultrasonore (1) comprend des façonnages (27, 33), lesquels coopèrent avec la pièce moulée (7) pour l'enclenchement et/ou le guidage et/ou le pivotement de cette dernière.

6. Système de transducteur ultrasonore selon au moins une des revendications précédentes, **caractérisé en ce qu'**un contact de raccordement pour l'extrémité libre d'un câble électrique (12) entrant dans le boîtier (2) du système de transducteur ultrasonore (1) est prévu dans le boîtier (2) du système de transducteur ultrasonore (1).

7. Système de transducteur ultrasonore selon la revendication 6, **caractérisé en ce que** l'extrémité libre du ressort (8) est prévue comme contact de raccordement.

8. Système de transducteur ultrasonore selon la revendication 6, **caractérisé en ce qu'**un point de soudure (38) agencé sur la pièce moulée (7) est prévu comme contact de raccordement.

9. Système de transducteur ultrasonore selon la revendication 6, **caractérisé en ce que** la pièce moulée (7) est réalisée comme composant MID.

10. Système de transducteur ultrasonore selon au moins une des revendications précédentes, **caractérisé en ce que** le boîtier (2) du système de transducteur ultrasonore (1), le corps de transducteur (4) et le dispositif de maintien (6) forment une unité de montage.

11. Système de transducteur ultrasonore selon au moins une des revendications précédentes, **caractérisé en ce que** le boîtier (2) du système de transducteur ultrasonore (1) comporte une zone d'appui plate (13), laquelle fait face à la zone de bord extérieur du trou de passage (15) dans l'état monté.

12. Système de transducteur ultrasonore selon la revendication 11, **caractérisé en ce qu'**un joint (16) se trouve entre la zone d'appui plate (13) et la zone de bord extérieur du trou de passage (15).

13. Système de transducteur ultrasonore selon au moins une des revendications précédentes, **caractérisé en ce que** le boîtier (2) du système de transducteur ultrasonore (1) comporte sur sa face supérieure une entretoise périphérique surélevée (19), laquelle est traversée par une ouverture de passage (20).

14. Système de transducteur ultrasonore selon au moins une des revendications précédentes, **caractérisé en ce que** la paroi de boîtier (5) possède, sur le côté extérieur faisant face au compteur d'eau à ultrasons (10), une géométrie sphérique ou parabolique.

15. Système de transducteur ultrasonore selon la revendication 14, **caractérisé en ce que** la paroi de boîtier (5) comporte, sur le côté extérieur faisant face au compteur d'eau à ultrasons (10), au moins une nervure de renforcement (17).

16. Système de transducteur ultrasonore selon au moins une des revendications précédentes, **caractérisé en ce que** la paroi de boîtier (5) possède, sur le côté extérieur faisant face au compteur d'eau à ultrasons (10), une géométrie étagée de type lentille de Fresnel (18).

17. Système de transducteur ultrasonore selon la revendication 16, **caractérisé en ce que** la paroi de boîtier (5) possède une épaisseur de paroi sensiblement constante au moins dans la zone de sondage acoustique.

18. Compteur d'eau à ultrasons (10) doté
d'une entrée (21),
d'une sortie (22),
d'un boîtier (3) pour l'installation du compteur d'eau à ultrasons (10) dans un réseau hydraulique,
d'un module électronique (23), lequel est agencé sur le côté extérieur du boîtier (3), et
au moins un trou de passage (15) pour le montage d'un système de transducteur ultrasonore (1), **caractérisé par** un système de transducteur ultrasonore (1) selon au moins une des revendications précédentes.

19. Compteur d'eau à ultrasons selon la revendication 18, **caractérisé en ce que** le trou de passage (15) comporte une zone de contact plate pour le boîtier (2) du système de transducteur ultrasonore (1).

20. Compteur d'eau à ultrasons selon la revendication 18 ou 19, **caractérisé en ce que** le trou de passage (15) comporte une zone de contact annulaire pour le boîtier (2) du système de transducteur ultrasonore (1).
